Europäisches Patentamt

European Patent Office

Office européen des brevets

(11) Publication number: 0 245 940
A1

# (12) EUROPEAN PATENT APPLICATION

(21) Application number: 87302907.8

(22) Date of filing: 02.04.87

(51) Int. Cl.⁴: **B01D 15/08** , G01N 30/32

(30) Priority: 16.04.86 GB 8609285

(43) Date of publication of application:
19.11.87 Bulletin 87/47

(84) Designated Contracting States:
BE CH DE ES FR GB IT LI NL SE

(71) Applicant: IMPERIAL CHEMICAL INDUSTRIES PLC
Imperial Chemical House Millbank
London SW1P 3JF(GB)

(72) Inventor: Campbell, William Clelland
52 Hambleton Avenue
Redcar Cleveland(GB)
Inventor: MacDonald, Lesley Shaw
86 Kilbowie Road
Cumbernauld Glasgow(GB)

(74) Representative: Martin, David Lincoln et al
Imperial Chemical Industries PLC Legal
Department: Patents PO Box 6 Bessemer
Road
Welwyn Garden City Herts, AL7 1HD(GB)

(54) Liquid flow analysis.

(57) An improved method for separation of materials from solutions using ion-exchange resins which has particular applicability in the separation of surfactant types in a surfactant product mixture. The flows of various liquids, for example sample solution and eluants through separation means, for example separation columns containing ion-exchange resins, and associated valves is controlled by an electronic or computer control system interfaced to the separation system with considerable improvements in reliability and efficiency over existing manual methods.

EP 0 245 940 A1

## Liquid Flow Analysis

The present invention relates to a method, system and apparatus for improved flow analysis of liquid streams.

Some analytical systems already exist for the separation of materials in solution using one or more separation columns at low pressure to separate the solution into fractions which can then be analysed individually. Hitherto the separation of material-containing solutions has been carried out manually using one or more separation columns at low pressure which require constant or at least frequent attendance by an operator. The separation column(s) usually contain suitable separating agents, for example ion-exchange resins, silica etc which remove one or more desired materials from the solution flowing through. Thereafter, the desired materials are recovered for analysis using an eluant.

Such prior art manual systems work quite well although problems do arise from time to time. For example uneven flow rates within the system and inappropriate eluents may lead to incomplete separations; draining of the columns may occur because of their design.

Many separations of materials from solutions and subsequent anaylses are carried out on a routine basis, for example in research laboratories or sometimes on streams involved in full-scale, continuous, commercial processes. In the latter case especially, it is desirable that the separations and analytical methods used be reliable and operable over extended periods of time. However problems such as drying of the resins and the formation of bubbles in separation columns have meant that the reliability of some methods has been questionable with the result that such methods have required careful monitoring by operators.

We have now found that systems used for column separations can be made more reliable than hitherto and can be made to operate substantially automatically.

Accordingly the present invention provides a method for the separation of at least one material from a solution which comprises flowing the said solution through a separation means, preferably a separator column, containing at least one sorbent which is selective for material in the solution and subsequently flowing an eluant through the separation means so as to elute material selectively sorbed by the sorbent, characterised in that the flow of said solution and the flow of eluant through the separator means are controlled using valves under computer or electronic control.

Preferably the system comprises a plurality of separator means, more preferably at least three such means, linked with one another in series relationship.

The valves used to control the flow may be two-way or three-way valves and in preferred embodiments of the invention various combinations of two-way and three-way valves may be employed. The computer or electronic control of the valves is achieved by the interfacing of the control system to the instrument. The control system is programmed so that on the occurrence of a pre-determined event, for example the expiry of a clock cycle or the change-over of a switch, a new arrangement of valves is set up in order to direct the flow of the sample solution, eluents and effluents through the separation means. In a preferred embodiment the computer or electronic control means includes provision for adjusting any one or more of the flow characteristics by feed-back of information arising from analysis of any one or more of the separated solutions or materials.

The valves are preferably constructed of materials, for example halocarbon polymers, which are resistant to aggressive fluids and it is further preferred to employ valves having low internal volume and no unswept volume. The valves are suitably solenoid-operated.

According to a further aspect of the present invention apparatus for the separation of at least one material from solution comprises in operative combination at least one separator means, preferably a separator column, at least one valve to control liquid flow through said separator means and computer or electronic control means to exercise control of the flow of liquid through said valve and separator means.

The method and apparatus of the present invention are suitable for use in many applications, for example in the separation of surfactant types in a surfactant product mixture, in the separation of trace metals from industrial effluents, and in the separation of phosphate types such as pyro-, ortho-and tripoly-phosphates in phosphate mixtures.

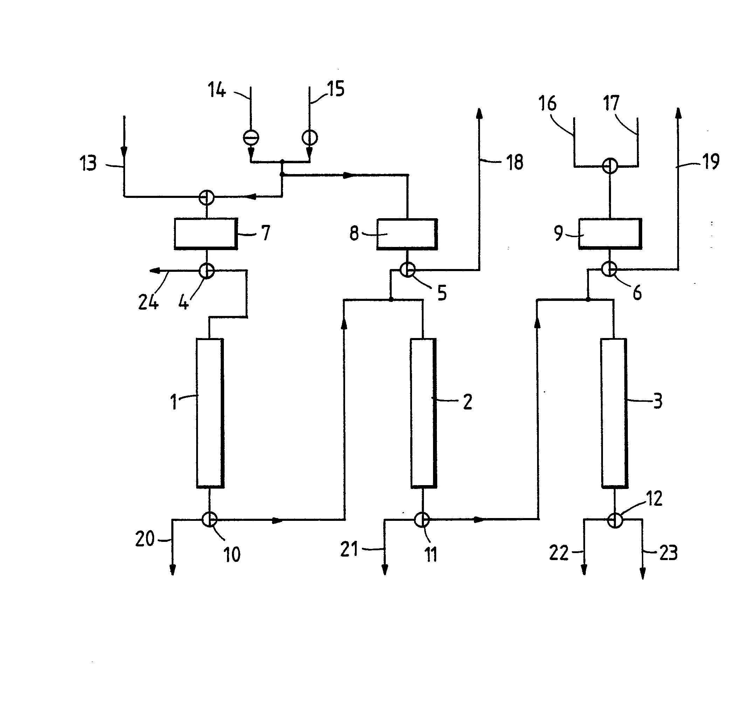

One embodiment of the present invention is described hereinafter with reference to the accompanying drawing which is a diagrammatic representation of a separation system according to the invention. This illustrated separation system is particularly adapted for the separation of surfactant types in a surfactant product mixture.

Referring to the drawing, the system comprises three separation columns (1, 2, 3). The inlet end of each column is provided with an associated three-way valve (4, 5 and 6) and pump (7, 8, 9). The outlet end of each column is also provided with a three-way valve (10, 11, 12). The sample to be separated is injected through line 13 and lines 14, 15, 16 and 17 are used for the provision of various other liquid flows. Lines 18 and 19 are lines for the recycle of solvents to lines 14 and 16 respectively. Lines 20, 21, 22 and 23 are used for the removal of separated products.

For the separation of a surfactant mixture, column 1 is filled with a cation-exchange resin, for example "Dowex" 50W x 2H$^+$ 100-200, column 2 is filled with an anion-exchange resin for sorption of strong anions, for example "Dowex" 1 x 2Cl$^-$ 100-200 and column 3 is filled with an anion-exchange resin for sorption of weak anions, for example "Dowex" 1 x 20H$^-$ 100-200. Because aggressive liquids are involved in this separation the valves are made of halocarbon polymers while any hollow tubing linking the various parts of the system is also made of a suitably resistant material, for example a hydrocarbon polymer.

In operation, the sample to be separated is injected through line 13 and is pumped down column 1 at a controlled and predetermined rate. (Waste washings from the sample reservoir are removed via line 24). Cationic species are adsorbed and held on the resin and the liquid effluent is pumped from the bottom of column 1, through valve 10 to the top of column 2. Passage down column 2 is at a controlled rate to allow the resin to adsorb anionic species. The effluent from the bottom of column 2 is pumped through valve 11 to the top of column 3. The resin in this column separates any soaps from the remaining liquid and the effluent from the column, containing non-ionic species, is collected for analysis via line 22.

A suitable eluant, for example hydrochloric acid, is fed through line 15 and valve 4 to remove the adsorbed species from the resin in column 1, the eluate being collected for analysis via line 20. Hydrochloric acid from line 15 is also used as eluant in column 2 via valve 5, the eluate being connected for analysis via line 21. A suitable eluant, for example potassium hydroxide is also used in column 3, being fed through line 16 and the soaps being collected via line 23.

Elution of the columns with acid and base regenerates the resins allowing further use of the columns but if necessary regeneration may be completed by further suitable flow of acid and alkali regenerants over the resins, for example hydrochloric acid fed through line 14 and potassium hydroxide solution fed through line 17.

The flow of the sample to be separated through line 13 and the flow of the liquids through lines 14, 15, 16, 17 together with all associated valves, for example valves 4, 5, 6, 10, 11 and 12, are controlled by an electronic or computer control system (not shown in the drawing) interfaced to the apparatus. The control system is programmed so that on the occurrence of a predetermined event, for example the expiry of a clock cycle, the valve settings are altered in order to direct a particular liquid, for example the sample, or an eluant or a regenerant, through a particular separator column, or to recycle a solvent or to control the removal of separated products. The control system also includes provision for adjusting any one or more of the flow characteristics of the various liquids under its control by feed-back of information from analysis of any one or more of the separated solutions or materials.

The Applicants have found that the method and apparatus of the invention enable liquid separations for analytical purposes to be carried out very reliably for long periods of time without any need for attendance by a process operator.

## Claims

1. A method for the separation of at least one material from a solution which comprises flowing the said solution through a separation means containing at least one sorbent which is selective for material in the solution and subsequently flowing an eluant through the separation means so as to elute material selectively sorbed by the sorbent, characterised in that the flow of said solution and the flow of eluant through the separator means are controlled using valves under computer or electronic control.

2. A method as claimed in claim 1 wherein the system comprises a plurality of separator means linked with one another in series relationship.

3. A method as claimed in claim 1 or claim 2 wherein the computer or electronic control means includes provision for adjusting any one or more of the flow characteristics by feed-back of information arising from analysis of any one or more of the separated solutions or materials.

4. A method as claimed in any one of the preceding claims wherein the solution to be separated comprises a surfactant product mixture containing at least two surfactant types and wherein the separation means comprises at least three separator columns containing, respectively, a cation-exchange resin, an anion-exchange resin for sorption of strong anions and an anion-exchange resin for sorption of weak anions.

5. Apparatus for the separation of at least one material from solution comprising in operative combination at least one separator means, at least one valve to control liquid flow through said separator means and computer or electronic control means to exercise control of the flow of liquid through said valve and separator means.

0 245 940

European Patent Office

**EUROPEAN SEARCH REPORT**

Application number

EP 87 30 2907

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 294 444 (THE DOW CHEMICAL COMPANY) * figure; page 4, lines 17-30, - page 5, line 20; page 7, lines 5-32; page 9, lines 2-6,33-40 * | 1,2,5 | B 01 D 15/08 G 01 N 30/32 |
| Y | * as above, plus: page 11, lines 14-19; page 12, lines 24-28 * | 4 | |
| Y | CHEMICAL ABSTRACTS, vol. 74, no. 20, May 1971, page 35, abstract no. 100875k, Columbus, Ohio, US; ZH. LESHCHENKO et al.: "Separation of mixtures of surfactants by using ion-exchange resins", & MASLO-ZHIR. PROM. 1971, 37(1), 19-22 * abstract * | 4 | |
| Y | US-A-4 274 967 (SNYDER) * figures 1,3,5; column 5, lines 11-59; column 7, lines 29-38; abstract * | 1,2 | |
| X | * as above * | 5 | |
|  | --- -/- | | |

TECHNICAL FIELDS SEARCHED (Int. Cl.4)

B 01 D 15/08
G 01 N 30/32
G 01 N 30/38
G 01 N 30/34
B 01 J 47/00
B 01 J 41/06
B 01 J 39/06
B 01 J 39/00
B 01 J 41/00
B 01 J 39/04
B 01 J 19/00
B 01 D 15/00

The present search report has been drawn up for all claims

| Place of search | Date of completion of the search | Examiner |
|---|---|---|
| BERLIN | 04-08-1987 | CECCHINI |

| DOCUMENTS CONSIDERED TO BE RELEVANT | | | Page 2 |
|---|---|---|---|
| Category | Citation of document with indication, where appropriate, of relevant passages | Relevant to claim | CLASSIFICATION OF THE APPLICATION (Int. Cl.4) |
| Y | DE-B-2 036 525 (BOEHRINGER MANNHEIM GMBH) * column 3, line 5 - column 4, line 56, particularly, column 4, lines 49-56 * | 1,2 | |
| Y | * as above * | 1,3 | |
| Y | SOVIET INVENTIONS ILLUSTRATED, Section Chemical, Week C50, 28th January 1983, abstract no. 89458 C/50, Derwent Publications Ltd., London, GB; & SU - A 729 507 (VORONTSOV AM) 28-04-1980 * abstract * | 1,3 | |
| | | | TECHNICAL FIELDS SEARCHED (Int. Cl.4) |

The present search report has been drawn up for all claims

| Place of search | Date of completion of the search | Examiner |
|---|---|---|
| BERLIN | 04-08-1987 | CECCHINI |